# FASCICULE DE BREVET EUROPEEN

(11) **EP 2 925 928 B1**
(45) Date de publication et mention de la délivrance du brevet: **28.06.2017**
(21) Numéro de dépôt: 13820960.6
(22) Date de dépôt: 28.11.2013
(51) Int. Cl.: D21H 17/44, D21H 17/45, D21H 17/56, D21H 17/57, D21H 21/06, D21H 21/40

(54) **FEUILLE DE SECURITE RESISTANTE AU FROISSEMENT**
KNICKBESTÄNDIGER SICHERHEITSFILM
CREASE-RESISTANT SECURITY FILM

(30) Priorité: 29.11.2012 FR 1261430
(43) Date de publication de la demande: 07.10.2015
(73) Titulaire: Arjowiggins Security, 92100 Boulogne Billancourt (FR)
(72) Inventeur: SARRAZIN, Pierre, F-38620 Saint Geoire En Valdaine (FR)
(74) Mandataire: Nony
(86) Numéro de dépôt international: PCT/IB2013/060472
(87) Numéro de publication internationale: WO 2014/083527

(56) Documents cités:
- WO-A1-2009/150117
- WO-A2-2008/152299

## Description

L'invention concerne une feuille de sécurité résistante au froissement, son procédé de fabrication et un document de sécurité comprenant cette feuille.

Actuellement, de nombreux documents de sécurité, tels que des billets de banque ou des documents d'identité, comprennent des supports en papier.

Un inconvénient des supports en papiers utilisés est qu'ils résistent mal au froissement. Ainsi, les zones froissées présentent des plis profonds, irréversibles, qui résistent mal à la salissure, de sorte que ces zones froissées sont affaiblies et donnent souvent lieu à des déchirures.

Ceci est particulièrement désavantageux dans le cas de documents qui, lors de leur manipulation, sont fréquemment pliés ou froissés, comme par exemple des billets de banque, la présence de plis les fragilisant et réduisant leur durée de vie, et rendant leur traitement automatisé malaisé, par exemple lors des vérifications d'authenticité ou d'usure sur machine de tri.

On connaît du document US 2004/0023008, des feuilles de sécurité, notamment des billets de banque, résistantes aux effets de la circulation, mettant en oeuvre des polyuréthanes et une résine poly(aminoamide-épichlorhydrine), comme agent de résistance à l'humidité. Cependant, ce document ne fait pas état d'agent de floculation cationique. Au contraire, le polyuréthane est réticulé. De plus, le procédé proposé dans ce document relève du traitement de surface.

Par ailleurs, le document WO 2009/150117 décrit un procédé de traitement anti-salissures de papiers de sécurité, comprenant une étape de dépôt en surface d'une composition comprenant un polyuréthane aliphatique à base de polycarbonate, un polyuréthane aliphatique à base de polyéther et en outre un agent de réticulation.

Comme il ressortira ci-après de la description, ni le traitement de surface, ni la réticulation, ne sont appropriés pour répondre aux objectifs fixés par l'invention, à savoir conférer une résistance au froissement.

Le traitement en masse du papier est une des solutions qui peut être envisagée pour améliorer la résistance au froissement.

Comme cela sera détaillé ci-après, l'emploi de la floculation, avant la formation de la feuille, permet de former un réseau global cellulose - agent de floculation - polymère *via* la formation de liaisons rendues possible grâce à la présence de l'agent de floculation.

Ainsi, le document WO 2008/152299 décrit des feuilles de sécurité comprenant un polymère anionique présentant une température de transition vitreuse supérieure à - 40 °C et un agent de floculation cationique, présentant une bonne résistance au froissement.

Toutefois, l'amélioration de la résistance aux tractions, notamment des longueurs de rupture, sèches et humides et de la résistance au double-pli des feuilles de sécurité est constamment recherchée.

En effet, il a pu être constaté que la floculation de dispersions polymériques anioniques ainsi que proposé dans WO 2008/152299, entraînent une diminution de certaines propriétés mécaniques telles que la résistance aux tractions, notamment les longueurs de rupture, sèches et humides, par rapport à un papier standard.

Il existe donc un besoin de fournir une feuille de sécurité qui présente une amélioration de ses propriétés mécaniques telles que la résistance aux tractions, notamment les longueurs de rupture, sèches et humides et la résistance au double-pli tout en conservant une bonne résistance au froissement.

De manière inattendue, les inventeurs ont constaté qu'un tel objectif pouvait être atteint sous réserve d'associer une dispersion anionique d'un polyuréthane, le polyuréthane présentant une élongation à la rupture supérieure à 600 %, et un agent de floculation cationique lors de la fabrication d'une feuille de sécurité.

Par « *dispersion anionique* », on entend une suspension aqueuse de particules présentant une charge de surface anionique. Ladite charge de surface est de préférence apportée par un composé tensioactif (ou surfactant) utilisé lors de la formation desdites particules. Le terme « *dispersion* » est ici utilisé de façon générique et peut donc également désigner une émulsion.

Ainsi, la présente invention concerne une feuille de sécurité résistante au froissement comprenant des fibres, des agrégats de polyuréthane, ledit polyuréthane étant en une proportion comprise entre 5 et 45 % en poids sec par rapport au poids sec total des fibres et du polyuréthane et présentant une élongation à la rupture supérieure à 600 %, en particulier selon la norme DIN 53504, et un agent de floculation cationique principal en une quantité comprise entre 1 et 5 % en poids sec par rapport au poids sec total des fibres et du polyuréthane.

Par « *agrégat de polyuréthanne* », on désigne la dispersion de polyuréthane anionique floculée qui a subit les étapes courantes du procédé papetier, à savoir l'égouttage, le pressage et le séchage. Sous l'effet desdites étapes courantes du procédé papetier, la dispersion de polyuréthane subi une coalescence conduisant à la formation desdits agrégats de polyuréthane au sein du réseau cellulose - agent de floculation.

Selon un mode de réalisation de l'invention, ladite feuille comprend en outre un agent de floculation cationique secondaire en une quantité comprise entre 0,1 et 0,5 % en poids sec par rapport au poids sec total des fibres et du polyuréthane.

Ce mode de réalisation est particulièrement avantageux lorsque la proportion du polyuréthane en poids sec par rapport au poids total des fibres en sec est élevée, en particulier lorsqu'elle dépasse 20 % en poids sec par rapport au poids total des fibres, car la présence de l'agent de floculation cationique secondaire permet de parfaire la floculation du polyuréthane.

La Demanderesse a trouvé, comme illustré dans les exemples ci-après, que la présence d'agrégats de polyuréthane et d'agent(s) de floculation dans la composition de la feuille selon l'invention permettait d'améliorer de façon significative la résistance aux tractions, notamment les longueurs de rupture, sèches et humides, et également la résistance à l'état humide, ainsi que la résistance au double-pli et la cohésion interne, tout en conservant une bonne résistance au froissement et à la déchirure de ladite feuille.

Au cours des expériences qu'elle a menées, la Demanderesse a trouvé que seules les feuilles comportant des polyuréthanes avec une élongation à la rupture supérieure à 600 % présentaient d'excellentes caractéristiques de résistance au froissement, aux tractions sèches et humides et au double-pli.

Ainsi, la feuille selon l'invention peut présenter une porosité après froissement proche de celle d'une feuille non froissée, c'est à dire que les plis occasionnés par le froissement n'affaiblissent pratiquement pas le papier. Cette caractéristique permet à la feuille de sécurité selon l'invention d'avoir une durée de circulation très élevée.

En vue de mettre en lumière l'intérêt de la floculation, telle que mise en oeuvre dans le cadre de la présente invention, une description de ce phénomène est présentée ci-dessous, sans que celle-ci ne lie les inventeurs à cette théorie.

Le phénomène de floculation se traduit chimiquement par la formation en milieu aqueux de liaisons électrostatiques entre un composé chimique présentant des groupements ionisés, à savoir dans le cadre de l'invention la dispersion anionique de polyuréthane, et un agent de floculation présentant des groupements ionisés de charge opposée à celle du composé chimique. L'agent de floculation forme des liaisons atomiques faibles (de l'ordre de 5 kJ/mol) avec le composé chimique selon un processus d'interactions chimiques se déroulant dans des conditions douces (par exemple, à température ambiante) et obligatoirement en milieu solvaté (par exemple l'eau).

Dans le cadre de la présente invention, à savoir mettant en oeuvre un composé chimique particulaire (ou une dispersion) anionique et un agent de floculation cationique, la floculation se déroule en deux étapes :
- adsorption d'une partie des particules anioniques sur les charges cationiques de l'agent de floculation ; puis
- agrégation des particules par coalescence due à la diminution des charges anioniques de surface des particules et l'apparition de liaisons de Van der Waals lors des étapes courantes du procédé papetier, à savoir l'égouttage, le pressage et le séchage.

Ainsi, la floculation aboutit à une répartition inhomogène d'agrégats de composé chimique entrelacés dans un réseau d'agent de floculation. Le système de floculation est employé pour un traitement en masse (en volume) de la feuille et s'effectue donc en partie humide (période pendant laquelle les fibres sont dispersées dans l'eau, formant alors une suspension fibreuse), avant la formation de la feuille.

Ainsi, les agrégats de particules sont répartis dans les interstices laissés vacants entre les fibres durant la formation de la feuille. Ces interstices n'étant plus accessibles après égouttage, pressage et séchage de la feuille, la pénétration de la salissure est moindre et la feuille présente donc une meilleure résistance à la salissure.

Avant la formation de la feuille selon l'invention, il y a, en plus des liaisons entre les particules anioniques du polymère et les charges cationiques de l'agent de floculation, formation de liaisons entre les charges anioniques de la cellulose et les charges cationiques de l'agent de floculation. Il se forme ainsi un réseau global (cellulose - agent de floculation - polymère) qui est conservé lors de la formation de la feuille, ce qui explique les excellents résultats de résistance au froissement, aux tractions, à la déchirure et au double-pli.

En vue de bien distinguer ce phénomène de floculation de la réticulation, qui intervient notamment lors d'un procédé de couchage, la Demanderesse a jugé utile de décrire ci-après le phénomène de réticulation.

Contrairement au phénomène de floculation, le phénomène de réticulation se traduit chimiquement par la formation de liaisons covalentes entre deux entités : un composé chimique et un réticulant.

Le réticulant, composé de groupements réactifs, forme des liaisons atomiques fortes (de l'ordre de 500 kJ/mol) avec certains groupements du composé chimique selon un processus de réaction chimique se déroulant sous des conditions énergétiques spécifiques (température, pression, radiation...). Les liaisons formées sont réparties de façon homogène. Elles sont permanentes et résistantes ce qui confère au mélange composé/réticulant de la rigidité et une stabilité dimensionnelle homogène, propriétés qui sont à l'opposé de celles recherchées pour une feuille de sécurité visée par l'invention qui doit être souple et résistante.

Selon un autre de ses aspects, la présente invention concerne un procédé de fabrication consistant à former ladite feuille par voie humide à partir d'une suspension aqueuse comprenant :
- des fibres,
- une dispersion anionique d'un polyuréthane, ledit polyuréthane étant en une proportion comprise entre 5 et 45 % en poids sec par rapport au poids sec total des fibres et du polyuréthane et présentant une élongation à la rupture supérieure à 600 %, et
- un agent de floculation cationique principal, en une quantité comprise entre 1 et 5 % en poids sec par rapport au poids sec total des fibres et du polyuréthane, puis à essorer et sécher ladite feuille.

Selon encore un autre de ses aspects, la présente invention concerne une feuille de sécurité résistante au froissement comprenant des fibres, obtenue par traitement en masse desdites fibres par un système de floculation, ledit système de floculation comprenant une dispersion anionique de polyuréthane, ledit polyuréthane présentant une élongation à la rupture supérieure à 600 % et un agent de floculation cationique.

Selon encore un autre de ses aspects, l'invention concerne une feuille de sécurité résistante au froissement comprenant des fibres, lesdites fibres comprenant en masse des agrégats de particules formés suite à la floculation d'une dispersion anionique de polyuréthane, ledit polyuréthane présentant une élongation à la rupture supérieure à 600 %, et d'un agent de floculation cationique.

### Fibres

Comme précisé ci-dessus, la feuille de sécurité selon l'invention comprend des fibres.

Dans la présente demande, l'expression « *poids total des fibres* » doit être comprise comme signifiant « *poids total des fibres en sec* », sauf indication contraire.

Selon un mode de réalisation de l'invention, les fibres entrant dans la composition de la feuille comprennent des fibres naturelles.

Parmi les fibres naturelles, on peut citer les fibres cellulosiques, tel que les fibres de bois, par exemple d'eucalyptus, de résineux ou leur mélange, de coton, de bambou, de viscose, de paille, d'abaca, d'asperto, de chanvre, de jute, de lin, de sisal ou leurs mélanges.

Les fibres peuvent être blanchies, semi-blanchies ou non blanchies.

De préférence, les fibres entrant dans la composition de la feuille comprennent des fibres cellulosiques, en particulier des fibres de coton.

En particulier, lesdites fibres cellulosiques sont présentes en une proportion supérieure à 60 % en poids sec par rapport au poids sec total des fibres et du polyuréthane, en particulier en une proportion supérieure à 70 %.

Selon un mode de réalisation particulier de l'invention, lesdites fibres cellulosiques représentent au moins 70 % en poids sec de la quantité totale de fibres.

En particulier, lesdites fibres cellulosiques sont des fibres de coton et représentent au moins 70 % en poids sec de la quantité totale de fibres.

De préférence, selon un autre mode de réalisation de l'invention, les fibres entrant dans la composition de la feuille peuvent comprendre des fibres synthétiques.

Ce mode de réalisation est particulièrement avantageux, car il permet d'améliorer encore les propriétés de résistance à la déchirure de la feuille selon l'invention.

En effet, au cours de ses recherches, la Demanderesse a trouvé que, de façon surprenante, l'utilisation de fibres synthétiques, généralement utilisées afin de renforcer le papier, présentait un effet synergique avec l'utilisation selon l'invention du polyuréthane. En effet, la Demanderesse a mesuré que les feuilles contenant des fibres synthétiques, tout en conservant une résistance au froissement élevée, présentaient de plus une résistance à la déchirure particulièrement élevée. La résistance à la déchirure des feuilles selon ce mode de réalisation particulier de l'invention est supérieure à la résistance à la déchirure des feuilles selon l'invention dépourvues de fibres synthétiques ainsi qu'à la résistance à la déchirure de feuilles comprenant des fibres synthétiques mais pas d'agrégats de polymère.

Selon un mode de réalisation préféré de l'invention, les fibres synthétiques sont en une proportion comprise entre 5 et 30 % en poids sec par rapport au poids sec total des fibres et du polyuréthane, et mieux comprise entre 10 et 15 %.

Selon un mode de réalisation particulier de l'invention, la feuille comprend des fibres de coton en une proportion d'au moins 70 % en poids sec par rapport au poids total des fibres et des fibres synthétiques en une proportion comprise entre 10 et 30 % en poids sec par rapport au poids total des fibres, la somme totale des fibres de coton et des fibres synthétiques étant égale à 100.

En particulier, les feuilles de sécurité selon l'invention comprenant des fibres synthétiques présentent une résistance à la déchirure selon la norme ISO 1974 « Détermination de la résistance au déchirement - Méthode Elmendorf » supérieure à 1300 mN.

Selon un mode de réalisation préféré de l'invention, lesdites fibres synthétiques sont choisies parmi les fibres de polyester, de polyamide, de rayonne et de viscose, de préférence ce sont des fibres de polyamide et/ou des fibres de polyester. Il peut s'agir, par exemple de fibres de polyamide 6-6 ou de fibres de polyester commercialisées par la société Kuraray sous le nom commercial EP133^{®}.

### Dispersion anionique de polyuréthane

Une feuille de sécurité selon l'invention comprend en outre au moins des agrégats de polyuréthane, le polyuréthane présentant une élongation à la rupture supérieure à 600 %.

L'élongation à la rupture est mesurée selon la norme DIN 53504 « Essai des élastomères - Détermination de la résistance à la rupture, de la résistance à la traction, de l'allongement à la rupture et des valeurs de contraintes dans l'essai de traction ».

Selon l'invention, ledit polyuréthane est présent en une proportion comprise entre 5 et 45 % en poids sec par rapport au poids sec total des fibres et du polyuréthane.

Selon un mode de réalisation particulier de l'invention, le polyuréthane présent dans la feuille de sécurité est présent en une proportion comprise entre 10 et 30 % en poids sec par rapport au poids sec total des fibres et du polyuréthane.

Selon un mode de réalisation préféré de l'invention, le polyuréthane selon l'invention, présent dans la composition de la feuille, présente une élongation à la rupture supérieure à 1000 %, de préférence comprise entre 1000 % et 3000 %.

Selon un mode de réalisation particulier de l'invention, ledit polyuréthane anionique présent dans la composition de la feuille présente une température de transition vitreuse inférieure à 0 °C, de préférence inférieure à - 25 °C, et plus préférentiellement inférieure à - 40 °C.

Selon un mode encore plus préféré, ledit polyuréthane anionique, présent dans la composition de la feuille présente une température de transition vitreuse comprise entre - 40 °C et - 80 °C.

On entend par « *température de transition vitreuse* », la température au-dessous de laquelle le polymère est rigide. Lorsque la température augmente, le polymère passe par un état de transition qui permet aux chaînes macromoléculaires libres des domaines amorphes de glisser les unes par rapport aux autres et le polymère se ramollit.

En particulier, ledit polyuréthane anionique est choisi parmi un polyuréthane-polyester, un polyuréthane-polyéther et un polyuréthane-polycarbonate.

De préférence, ledit polyuréthane anionique est un polyuréthane-polyester.

De tels polymères sont disponibles, par exemple :
- auprès de la société Bayer, sous la dénomination Impranil DLC^{®} (Elongation à la rupture = 600 % ; Tg = - 34 °C) ;
- auprès de la société Alberdingk Boley, sous la dénomination Alberdingk U 2101^{®} (Elongation à la rupture = 800 % ; Tg = - 50 °C) ;
- auprès de la société Tanatex Chemicals, sous la dénomination Edolan SN ^{®} (Elongation à la rupture = 1100 % ; Tg = - 45 °C) ; et
- auprès de la société Baxenden-Kemira, sous la dénomination Witcobond 435-82^{®} (Elongation à la rupture = 1500 % ; Tg = - 58 °C).

Selon un mode de réalisation particulier, ledit polyuréthane anionique n'est pas réticulable.

### Agent de floculation

Une feuille de sécurité selon l'invention comprend en outre au moins un agent de floculation cationique principal en une quantité comprise entre 1 et 5 % en poids sec par rapport au poids sec total des fibres et du polyuréthane.

De préférence, l'agent de floculation cationique principal est présent en une quantité comprise entre 1,5 et 2,5 % en poids sec par rapport au poids sec total des fibres et du polyuréthane.

L'agent de floculation cationique principal présent dans la feuille de sécurité selon l'invention est choisi parmi une résine cationique, les polyacrylamides, les polyéthylèneimines, les polyvinylamines et leurs mélanges.

Selon un mode de réalisation préféré de l'invention, l'agent de floculation cationique principal est une résine cationique. En particulier, cette résine est une résine polyamide-amine-épichloridrine, dite résine PAAE.

Selon un autre mode de réalisation de l'invention, l'agent de floculation cationique principal est choisi parmi les polyacrylamides, les polyéthylèneimines, les polyvinylamines et leurs mélanges.

Selon un mode particulier de réalisation de l'invention, la feuille de sécurité comprend, outre l'agent de floculation cationique principal décrit ci-dessus, un agent de floculation cationique secondaire.

Un tel agent de floculation cationique secondaire est présent en une quantité comprise entre 0,1 et 0,5 % en poids sec par rapport au poids sec total des fibres et du polyuréthane.

De façon préférée, ledit agent de floculation cationique secondaire est choisi parmi les polyacrylamides, les polyéthylènimines, les polyvinylamines et leurs mélanges.

### Elément de sécurité

Selon un mode de réalisation de l'invention, la feuille de sécurité comprend au moins un élément de sécurité.

En particulier, ledit élément de sécurité est choisi parmi les dispositifs optiquement variables (OVD), notamment les éléments à effet interférentiel, en particulier les éléments iridescents, les hologrammes, les fils de sécurité, les filigranes, les planchettes, les pigments ou fibres luminescents et/ou magnétiques et/ou métalliques, et leurs combinaisons.

De plus, la feuille selon l'invention peut comporter un dispositif RFID (dispositif d'identification radio fréquence).

Selon un autre mode de réalisation de l'invention, la feuille de sécurité comprend au moins une zone dépourvue de fibres au moins partiellement, zone également appelée « *fenêtre* ».

Selon un autre mode de réalisation, la feuille de sécurité selon l'invention comprend un fil ou une bande de sécurité incorporé(e), notamment totalement ou partiellement, dans ladite feuille, et de préférence apparaissant dans au moins une fenêtre.

### Charges minérales

Selon un mode de réalisation de l'invention, la feuille de sécurité comprend des charges minérales en une quantité de 1 à 10 % en poids sec par rapport au poids sec total de la composition de la feuille.

En particulier, lesdites charges minérales sont présentes dans une proportion comprise entre 1 et 5 % en poids sec par rapport au poids sec total de la composition de la feuille.

Ces charges sont choisies, par exemple, parmi le carbonate de calcium, le kaolin, le dioxyde de titane ou leurs mélanges.

### Autres charges et adjuvants

La feuille de sécurité selon l'invention peut comprendre en outre des charges et adjuvants couramment utilisés dans le domaine papetier.

Il s'agit en particulier de charges synthétiques, d'agents de rétention et/ou d'agents de résistance à l'état humide.

### Couche de surfaçage externe

Selon un autre mode de réalisation de l'invention, la feuille de sécurité peut comprendre en outre une couche de surfaçage externe.

Ces couches de surfaçage, revêtues sur au moins une face d'une feuille, sont bien connues de l'homme du métier et permettent, par exemple pour une couche à base d'un alcool polyvinylique, d'améliorer les propriétés de résistance au double-plis et à la traction de la feuille.

Selon un autre exemple, la feuille de sécurité selon l'invention peut comprendre une couche de surfaçage destinée à renforcer ses propriétés de durabilité, telle que par exemple une couche dont la composition est décrite dans la demande EP 1 319 104 et qui comprend un liant élastomère transparent ou translucide, tel qu'un polyuréthane, et une silice colloïdale.

### Procédé de fabrication

L'invention concerne également un procédé de fabrication de la feuille de sécurité décrite ci-dessus.

Selon l'invention, le procédé de fabrication consiste à former ladite feuille par voie humide à partir d'une suspension aqueuse comprenant :
- des fibres,
- une dispersion anionique d'un polyuréthane, ledit polyuréthane étant en une proportion comprise entre 5 et 45 % en poids sec par rapport au poids sec total des fibres et du polyuréthane et présentant une élongation à la rupture supérieure à 600 %, et
- un agent de floculation cationique principal, en une quantité comprise entre 1 et 5 % en poids sec par rapport au poids sec total des fibres et du polyuréthane, puis à essorer et sécher ladite feuille.

Selon un mode de réalisation de l'invention, ladite suspension aqueuse comprend en outre un agent de floculation cationique secondaire en une quantité comprise entre 0,1 et 0,5 % en poids sec par rapport au poids sec total des fibres et du polyuréthane.

Le procédé de l'invention permet, grâce à l'utilisation d'un polyuréthane et d'agent(s) de floculation, de faire floculer ledit polyuréthane sur les fibres et d'obtenir une feuille de sécurité présentant des propriétés de résistance au froissement particulièrement élevées.

Selon l'invention, la dispersion aqueuse du polyuréthane anionique et l'agent de floculation cationique principal sont mélangés en masse dans la suspension fibreuse avant l'égouttage.

Ce procédé se distingue clairement d'un procédé de couchage.

Ainsi, selon un mode de réalisation particulier de l'invention, ladite suspension aqueuse est obtenue à partir d'un mélange de fibres et dudit agent de floculation cationique principal, auquel on ajoute ladite dispersion anionique de polyuréthane et éventuellement ledit agent de floculation cationique secondaire avant de procéder à la formation de ladite feuille.

Ce mode de réalisation présente l'avantage de mettre en contact le polyuréthane et l'agent de floculation afin de faciliter la floculation.

Ce mode de réalisation présente également l'avantage de pouvoir être appliqué à des suspensions aqueuses de fibres « *standard* » utilisées pour la fabrication des feuilles de sécurité car elles comprennent des agents de résistance à l'état humide qui peuvent également être utilisés comme agents de floculation principaux dans le cadre de la présente invention.

Selon un cas particulier du procédé, on ajoute ladite dispersion anionique de polyuréthane avant ledit agent de floculation secondaire.

Selon un mode de réalisation de l'invention, le procédé de fabrication de la feuille de sécurité comprend une étape dans laquelle au moins une face de ladite feuille, après égouttage de ladite suspension est revêtue d'une couche de surfaçage.

Cette couche de surfaçage peut permettre, par exemple, d'améliorer les propriétés de résistance au pliage et/ou à la traction ou bien encore les propriétés de durabilité de ladite feuille, comme décrit ci-dessus.

L'invention concerne également un document de sécurité comprenant la feuille de sécurité objet de l'invention, ou telle qu'obtenue par le procédé objet de l'invention, décrit ci-dessus.

En particulier, l'invention concerne un moyen de paiement, tel qu'un billet de banque, une carte de paiement, un chèque ou un ticket restaurant, un document d'identité, tel qu'une carte d'identité, un visa, un passeport ou un permis de conduire, une carte, notamment d'accès, un ticket de loterie, un titre de transport ou encore un ticket d'entrée à des manifestations culturelles ou sportives, une carte de fidélité, une carte de prestation, une carte d'abonnement, une carte à jouer ou à collectionner, un bon d'achat ou un voucher.

Il s'agit de préférence d'un billet de banque, d'un permis de conduire ou d'une carte, notamment d'accès, de paiement ou d'identité, de fidélité, de prestation, d'abonnement, à jouer ou à collectionner.

### Caractérisation de la feuille de sécurité

### 1. Résistance à la traction à l'état sec

Afin d'évaluer la résistance à la traction, notamment la longueur de rupture, à l'état sec, on peut mesurer la longueur à laquelle les feuilles cassent sous l'effet de leur propre poids selon la norme ISO 1924-2.

Selon cette méthode, les feuilles selon l'invention présentent avantageusement une longueur de rupture sèche supérieure de 5 à 35 %, de préférence de 25 à 35 %, à la longueur de rupture sèche d'une feuille de même composition, le polyuréthane étant remplacé par du styrène butadiène comme décrit dans le document WO 2008/15229 précité.

### 2. Résistance à la traction à l'état humide

Afin d'évaluer la résistance à la traction, notamment la longueur de rupture, à l'état humide, on peut mesurer la longueur à laquelle les feuilles cassent sous l'effet de leur propre poids selon la norme NF Q03-056.

Selon cette méthode, les feuilles selon l'invention présentent avantageusement une longueur de rupture humide supérieure de 3 à 50 %, de préférence de 30 à 50 %, à la longueur de rupture humide d'une feuille de même composition, le polyuréthane étant remplacé par du styrène butadiène comme décrit dans le document WO 2008/15229 précité.

### 3. Résistance à la déchirure

Les mesures de résistance à la déchirure peuvent être effectuées selon la norme ISO 1974. L'indice de déchirure est obtenu en divisant la résistance à la déchirure par le grammage mesuré selon la norme ISO 536.

### 4. Résistance au double-pli

Les mesures de résistance au double-pli peuvent être effectuées selon la norme ISO 5626.

Selon cette méthode, les feuilles selon l'invention présentent avantageusement une résistance au double-pli supérieure de 30 à 100 %, de préférence de 50 à 100 %, à la résistance au double-pli d'une feuille de même composition, le polyuréthane étant remplacé par du styrène butadiène comme décrit dans le document WO 2008/15229 précité.

### 5. Porosité et résistance au froissement

### Test de froissement

Afin d'évaluer la résistance au froissement de la feuille de sécurité, on peut effectuer des mesures de la porosité BENDTSEN avant et après froissement.

En effet, l'opération de froissement provoque, du fait des plis formés, une altération plus ou moins prononcée de la surface du papier, conduisant à une augmentation de sa porosité et donc de sa fragilité. En comparant la valeur de la porosité du papier avant et après froissement on peut donc évaluer la résistance au froissement de ce dernier. Moins l'augmentation de la porosité entre la feuille initiale et la feuille froissée est marquée, moins le papier est résistant au froissement. Le but est donc d'obtenir des valeurs de porosité après froissement les plus basses possibles.

Le test de froissement permet donc de déterminer la résistance au froissement des papiers tels que les papiers à billets de banque et les papiers d'emballage.

L'appareil utilisé correspond à celui décrit par le National Bureau Of Standards (Carson, F.T. Shaw, M.B. Wearing quality of experimental currency type papers, J. Research NBS 36, 256-257 (1946) RP 1701).

L'appareil comprend :
a) un dispositif pour rouler l'éprouvette de papier en un cylindre. Ce dispositif est constitué d'un manchon fendu à l'intérieur duquel est placée une fourche mobile à deux dents.
b) un tube dont l'une des extrémités est pourvue d'un couvercle mobile.
c) un guide cylindre glissant à l'intérieur du tube.
d) un guide cylindrique permettant de maintenir à l'intérieur et en position verticale le piston dont la base inférieure repose à l'extrémité d'un levier. Le guide cylindrique est conçu de telle manière que le tube peut coulisser entre ce guide et le piston.
e) un levier monté sur un pivot.
f) un poids à l'extrémité du bras long du levier, opposée à celle du bras court qui supporte le piston.

La force de froissage est réglée par la position du poids sur le bras du levier, de manière à ce que la pression sur le piston soit de 10 kg/cm² ± 0,1 kg/cm².

Les différentes pièces cylindriques : guide, tube, piston doivent pouvoir coulisser librement et notamment glisser sous leur poids.

Tube et piston étant en place dans le guide, le piston doit tomber ou se lever selon que l'on soulève ou que l'on rabaisse le poids à l'extrémité du levier.

### Echantillonnage et conditionnement

L'échantillonnage et le conditionnement des éprouvettes se font selon les normes NFQ 03-009 et NFQ 03-010. Dans un but particulier, les éprouvettes peuvent être mesurées telles quelles. Etant donné que l'éprouvette est constamment manipulée, il est nécessaire, pour éviter des échanges d'humidité avec l'opérateur, que ce dernier porte des gants d'un matériau barrière à l'humidité, pendant la préparation des éprouvettes et l'exécution du test.

### Préparation des éprouvettes

Des éprouvettes de 67 mm de côté sont découpées en utilisant un gabarit. Le sens marche est repéré sur chaque éprouvette.

### Mode opératoire

L'entrefourche et les deux fentes du manchon étant alignées, introduire l'éprouvette selon le sens marche jusqu'à sa moitié, puis la rouler par rotation de la fourche.

Le tube, couvercle fermé, est alors glissé en continuité du manchon et l'éprouvette roulée y est transférée par un mouvement aller-retour de la fourche.

Le tube, tenu par le couvercle avec une main, est alors placé en position verticale sur le piston. Le froissage est effectué en pressant sur le couvercle jusqu'à ce que l'extrémité du bras long du levier se soulève au-dessus de sa position de repos. Il est important que la pression exercée soit suffisante pour lever le poids, mais ni trop forte ni trop rapide pour que le levier vienne en butée. Un moyen de contrôler l'effort est d'utiliser les deux mains l'une sur l'autre pour appuyer sur le couvercle.

Le couvercle est ouvert et l'éprouvette est froissée en forme de petit accordéon, et sortie du tube. Elle est remise plane en effectuant de la main de prudents étirements : agir trop brutalement pourrait produire, sur le côté, des entailles qui conduiraient à la déchirure de l'éprouvette.

L'éprouvette redressée est présentée à nouveau pour roulage devant la fente du manchon mais tournée de 90° par rapport à la première introduction ; le cycle complet est répété.

On effectue ainsi huit cycles, avec rotation à chaque fois de 90°, et en retournant l'éprouvette après la quatrième fois.

On peut en particulier attendre un certain temps entre chaque cycle, par exemple trente minutes, pour permettre au matériau auto-réparant de se restructurer. Cela permet de se rapprocher des conditions de circulation réelles que cherche à reproduire le test de résistance au froissement. En effet, lors de la circulation des supports d'information, les contraintes sont appliquées de façon répétée mais épisodiquement.

### Mesure de la résistances au froissement

La perméabilité à l'air de chaque éprouvette est mesurée avant et après froissage à l'aide d'un porosimètre BENDTSEN selon la norme ISO 5636-3.

La mesure devant être faite dans les mêmes conditions avant et après froissage, il est nécessaire dans les deux cas d'enlever la butée de la tête du porosimètre si la course normale est insuffisante pour pouvoir glisser l'éprouvette froissée.

Après froissage, la porosité est mesurée comme suit : chaque éprouvette est redressée jusqu'à ce qu'elle soit raisonnablement plane. Ceci peut-être facilement réalisé en tenant entre le pouce et l'index, l'éprouvette par deux côtés opposés puis en l'étirant en trois ou quatre endroits. Cette opération est répétée par les deux autres côtés ; faire cette opération en tout quatre fois est généralement suffisant pour obtenir une éprouvette suffisamment plane.

Afin de former sur l'éprouvette une surface circulaire dont la planéité soit telle que les fuites de surface soient négligeables face à la mesure de porosité, chaque éprouvette est introduite entre les mâchoires du dispositif de serrage d'un éclatomètre et l'on applique durant deux secondes une pression suffisante pour marquer le papier. La porosité est mesurée en s'assurant que la tête du porosimètre BENDTSEN est centrée sur la surface pressée à l'éclatomètre.

### Fidélité

Le nombre d'éprouvettes à tester est fonction de l'échantillonnage étudié. La reproductibilité du test est telle qu'une éprouvette par feuille-échantillon est suffisante.

### Résultats

Selon cette méthode, la porosité des feuilles selon l'invention après froissement peut varier de 1 à 20 ml/min, en particulier de 1 à 12 ml/min.

### 6. Cohésion Interne et résistance au froissement

### Test de froissement

Afin d'évaluer la résistance au froissement de la feuille de sécurité, on peut effectuer des mesures de cohésion interne avant et après froissement.

En effet, l'opération de froissement provoque, du fait des plis formés, une altération plus ou moins prononcée de la liaison inter-fibres, conduisant à une diminution de sa cohésion interne et donc à une augmentation de sa fragilité. En comparant la valeur de la cohésion interne du papier avant et après froissement, on peut donc évaluer une partie de la résistance au froissement de ce dernier. Plus la valeur absolue de la cohésion interne est élevée, plus le papier est résistant au froissement. Le but est donc d'obtenir des valeurs de cohésion interne après froissement les plus hautes possibles.

Le test de froissement permet donc de déterminer la résistance au froissement des papiers tels que les papiers à billets de banque et les papiers d'emballage.

L'appareil utilisé correspond à celui décrit par le National Bureau Of Standards (Carson, F.T. Shaw, M.B. Wearing quality of experimental currency type papers, J. Research NBS 36, 256-257 (1946) RP 1701).

L'appareil comprend :
a) un dispositif pour rouler l'éprouvette de papier en un cylindre. Ce dispositif est constitué d'un manchon fendu à l'intérieur duquel est placée une fourche mobile à deux dents,
b) un tube dont l'une des extrémités est pourvue d'un couvercle mobile,
c) un guide cylindre glissant à l'intérieur du tube,
d) un guide cylindrique permettant de maintenir à l'intérieur et en position verticale le piston dont la base inférieure repose à l'extrémité d'un levier. Le guide cylindrique est conçu de telle manière que le tube peut coulisser entre ce guide et le piston,
e) un levier monté sur un pivot, et
f) un poids à l'extrémité du bras long du levier, opposée à celle du bras court qui supporte le piston.

La force de froissage est réglée par la position du poids sur le bras du levier, de manière à ce que la pression sur le piston soit de 10 kg/cm² ± 0,1 kg/cm².

Les différentes pièces cylindriques : guide, tube, piston doivent pouvoir coulisser librement et notamment glisser sous leur poids.

Tube et piston étant en place dans le guide, le piston doit tomber ou se lever selon que l'on soulève ou que l'on rabaisse le poids à l'extrémité du levier.

### Echantillonnage et conditionnement

L'échantillonnage et le conditionnement des éprouvettes se font selon les normes NFQ 03-009 et NFQ 03-010. Dans un but particulier, les éprouvettes peuvent être mesurées telles quelles. Etant donné que l'éprouvette est constamment manipulée, il est nécessaire, pour éviter des échanges d'humidité avec l'opérateur, que ce dernier porte des gants d'un matériau barrière à l'humidité, pendant la préparation des éprouvettes et l'exécution du test.

### Préparation des éprouvettes

Des éprouvettes de 7 cm de large et 14 cm de long sont découpées en utilisant un gabarit. Le sens marche est repéré sur chaque éprouvette.

### Mode opératoire

L'entrefourche et les deux fentes du manchon étant alignées, introduire l'éprouvette selon le sens marche jusqu'à sa moitié, puis la rouler par rotation de la fourche.

Le tube, couvercle fermé, est alors glissé en continuité du manchon et l'éprouvette roulée y est transférée par un mouvement aller-retour de la fourche.

Le tube, tenu par le couvercle avec une main, est alors placé en position verticale sur le piston. Le froissage est effectué en pressant sur le couvercle jusqu'à ce que l'extrémité du bras long du levier se soulève au-dessus de sa position de repos. Il est important que la pression exercée soit suffisante pour lever le poids, mais ni trop forte ni trop rapide pour que le levier vienne en butée. Un moyen de contrôler l'effort est d'utiliser les deux mains l'une sur l'autre pour appuyer sur le couvercle.

Le couvercle est ouvert et l'éprouvette est froissée en forme de petit accordéon, et sortie du tube. Elle est remise plane en effectuant de la main de prudents étirements : agir trop brutalement pourrait produire, sur le côté, des entailles qui conduiraient à la déchirure de l'éprouvette.

L'éprouvette redressée est présentée à nouveau pour roulage devant la fente du manchon mais tournée de 180° par rapport à la première introduction ; le cycle complet est répété.

On effectue ainsi huit cycles, avec rotation à chaque fois de 180°, et en retournant l'éprouvette après la quatrième fois.

On peut en particulier attendre un certain temps entre chaque cycle, par exemple trente minutes. Cela permet de se rapprocher des conditions de circulation réelles que cherche à reproduire le test de résistance au froissement. En effet, lors de la circulation des supports d'information, les contraintes sont appliquées de façon répétée mais épisodiquement.

### Mesure de la cohésion interne

La cohésion interne de chaque éprouvette est mesurée avant et après froissage à l'aide d'un appareil SCOTT (modèle B, N°ES033) selon la norme TAPPI UM403.

### Fidélité

Le nombre d'éprouvettes à tester est fonction de l'échantillonnage étudié. La reproductibilité du test est telle qu'une éprouvette par feuille-échantillon est suffisante.

### Résultats

Selon cette méthode, les feuilles selon l'invention présentent avantageusement une cohésion interne supérieure de 10% à 100 %, de préférence de 30% à 70 %, à la cohésion interne d'une feuille de même composition, le polyuréthane étant remplacé par du styrène butadiène comme décrit dans le document WO 2008/15229 précité.

Dans le texte, les expressions « *supérieur(e) à* ... » et « *inférieur(e) à* ... » entendent signifier que les bornes sont incluses, sauf mention contraire.

L'invention est illustrée plus en détail par les exemples décrits ci-après donnés à titre illustratif et sans caractère limitatif.

### EXEMPLES

Les feuilles A, B, C, D, E et F et 1 à 9 testées ci-après sont préparées selon le procédé papetier courant, c'est-à-dire notamment par égouttage, pressage puis séchage de suspensions aqueuses dont les compositions en poids sec sont données dans les tableaux 1 et 2 ci-dessous.

La quantité de résine polyamide-amine-épichloridrine (résine PAAE), est fixée à 2,5 % en poids sec par rapport au poids sec total des fibres et du polyuréthane.

La résine PAAE joue un rôle d'agent de résistance à l'état humide dans les exemples comparatifs A, C et E.

Dans les exemples B, D, F et 1 à 9, la résine PAAE a un rôle d'agent de floculation cationique et également de résistance à l'état humide.

Deux types de fibres cellulosiques ont été mis en oeuvre.

Lesdites feuilles subissent ensuite, selon une pratique courante dans le domaine papetier, un surfaçage externe, comme décrit précédemment, déposé à raison de 5 g/m²/face. Ledit surfaçage est réalisé par une presse encolleuse.

Les feuilles A, B, C, D, E et F et 1 à 9 ainsi obtenues, correspondant respectivement aux exemples comparatifs A, B, C, D, E et F et aux exemples 1 à 9 selon l'invention, ont été soumises aux tests décrits précédemment.

### Résultats :

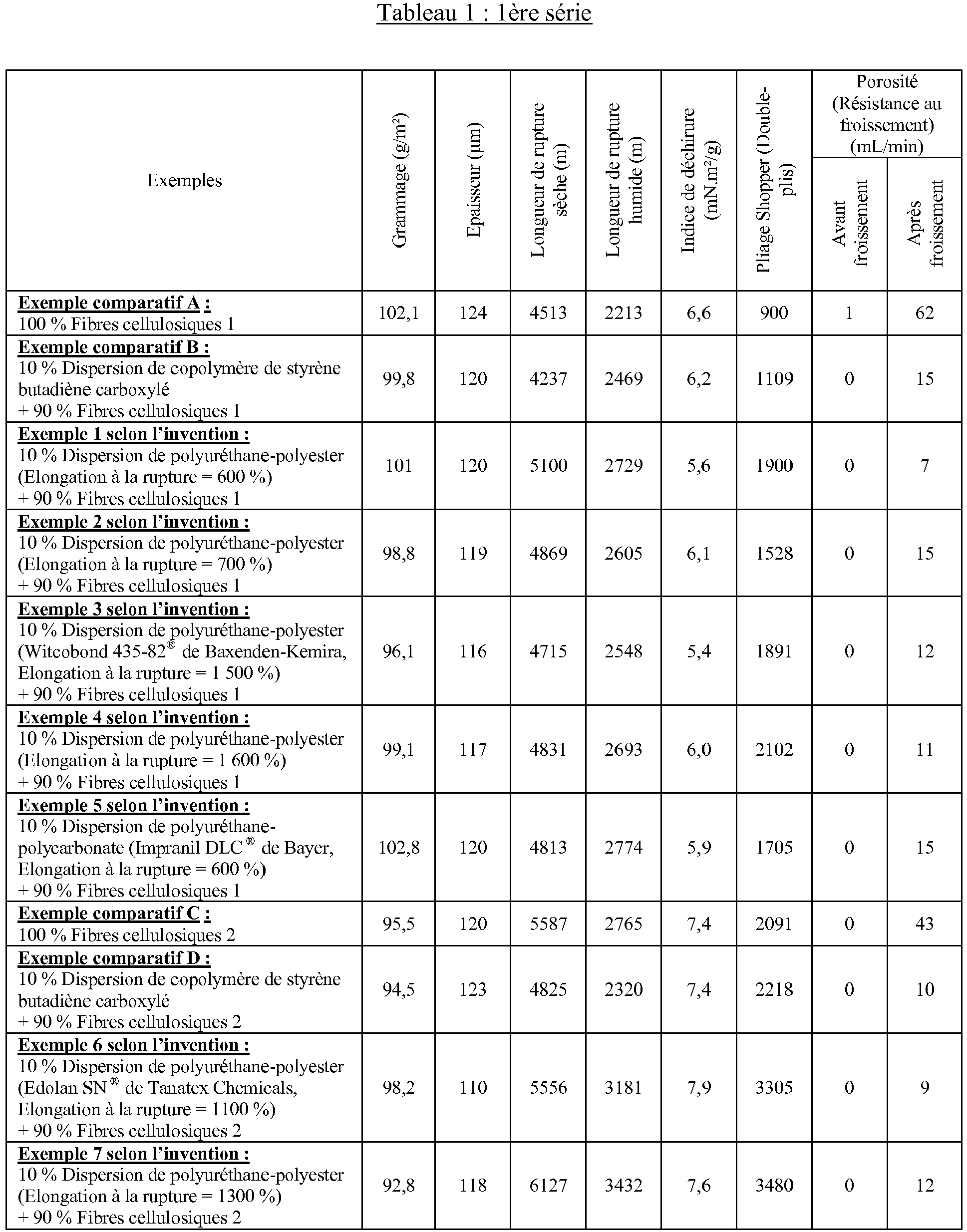

### Interprétation des résultats :

Comme le montre le tableau 1 des résultats, les feuilles des exemples 1 à 7 selon l'invention présentent des valeurs de résistance à la traction, notamment de longueur de rupture, à l'état sec et à l'état humide bien supérieures à celles des exemples comparatifs B et D.

En outre, les feuilles des exemples 1 à 7 présentent des valeurs de résistance à la déchirure comparables à celles des exemples comparatifs A, B, C et D, ce qui montre que l'utilisation des polyuréthanes ne dégrade pas les propriétés de résistance à la déchirure.

De plus, pour les feuilles selon l'invention, la résistance au double-pli est fortement augmentée par rapport aux feuilles des exemples comparatifs A, B, C et D.

De la même façon, les feuilles des exemples 1 à 7 présentent des résistances au froissement inchangées par rapport aux exemples comparatifs B et D pris comme référence.

Ainsi, par rapport à une composition fibreuse donnée, les essais ont permis de démontrer l'amélioration des performances mécaniques par la mise en oeuvre de polyuréthane conformément à l'invention.

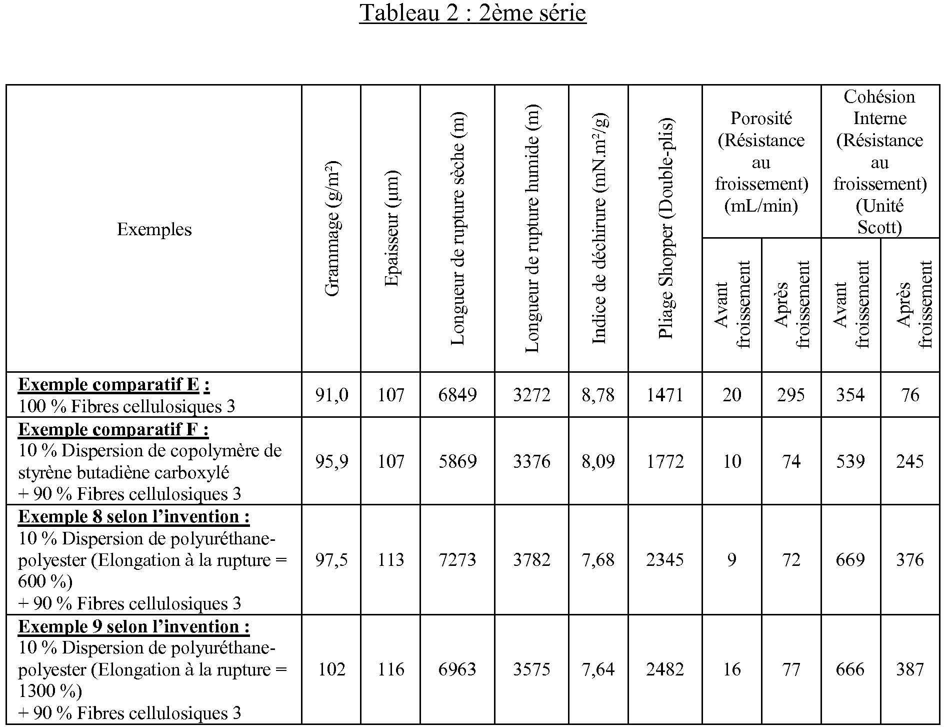

### Interprétation des résultats :

Comme le montre le tableau 2 des résultats, les feuilles des exemples 8 et 9 selon l'invention présentent des valeurs de résistance à la traction, notamment de longueur de rupture, à l'état sec et à l'état humide bien supérieures à celles des exemples comparatifs E et F.

En outre, pour les feuilles des exemples 8 et 9 selon l'invention, la résistance au double-pli est fortement augmentée par rapport aux feuilles des exemples comparatifs E et F.

De plus, les feuilles des exemples 8 et 9 présentent des résistances au froissement, accès sur la porosité, inchangées par rapport à l'exemple comparatif F pris comme référence.

De la même façon, les feuilles des exemples 8 et 9 présentent des résistances au froissement, accès sur la cohésion interne, améliorées par rapport aux feuilles des exemples comparatifs E et F.

Ainsi, par rapport à une composition fibreuse donnée, les essais ont permis de démontrer l'amélioration des performances mécaniques par la mise en oeuvre de polyuréthane conformément à l'invention.

## Revendications

1. Feuille de sécurité résistante au froissement comprenant :
- des fibres,
- des agrégats de polyuréthane, le polyuréthane étant en une proportion comprise entre 5 et 45 % en poids sec par rapport au poids sec total des fibres et du polyuréthane et présentant une élongation à la rupture supérieure à 600 %, et
- un agent de floculation cationique principal en une quantité comprise entre 1 et 5 % en poids sec par rapport au poids sec total des fibres et du polyuréthane.

2. Feuille de sécurité selon la revendication 1, **caractérisée par le fait que** la proportion dudit polyuréthane est comprise entre 10 et 30 % en poids sec par rapport au poids sec total des fibres et du polyuréthane.

3. Feuille de sécurité selon l'une des revendications précédentes, **caractérisée par le fait que** ledit polyuréthane présente une élongation à la rupture supérieure à 1000 %.

4. Feuille de sécurité selon l'une quelconque des revendications précédentes, **caractérisée par le fait que** ledit polyuréthane présente une température de transition vitreuse inférieure à 0°C, de préférence inférieure à - 25°C, et plus préférentiellement inférieure à - 40°C.

5. Feuille de sécurité selon l'une quelconque des revendications précédentes, **caractérisée par le fait que** ledit polyuréthane est choisi parmi un polyuréthane-polyester, un polyuréthane-polyéther et un polyuréthane-polycarbonate et de préférence est un polyuréthane-polyester.

6. Feuille de sécurité selon l'une quelconque des revendications précédentes, **caractérisée par le fait que** ledit agent de floculation cationique principal est choisi parmi une résine cationique, les polyacrylamides, les polyéthylèneimines, les polyvinylamines et leurs mélanges, de préférence c'est une résine cationique, et mieux une résine polyamide-amine-épichloridrine.

7. Feuille de sécurité selon l'une quelconque des revendications précédentes, **caractérisée par le fait que** lesdites fibres comprennent des fibres cellulosiques, en particulier des fibres de coton, lesdites fibres cellulosiques étant de préférence présentes en une proportion supérieure à 60 % en poids sec par rapport au poids sec total des fibres et du polyuréthane, en particulier en une proportion supérieure à 70 %.

8. Feuille de sécurité selon l'une quelconque des revendications précédentes, **caractérisée par le fait que** lesdites fibres comprennent des fibres synthétiques, en particulier choisies parmi les fibres de polyamide et/ou les fibres de polyester, lesdites fibres synthétiques étant de préférence présentes en une quantité comprise entre 5 et 30 % par rapport au poids sec total des fibres et du polyuréthane.

9. Feuille de sécurité selon l'une quelconque des revendications précédentes, **caractérisée par le fait que** ladite feuille comprend un agent de floculation cationique secondaire choisi parmi les polyacrylamides, les polyéthylènimines, les polyvinylamines et leurs mélanges, en une quantité pouvant être comprise entre 0,1 et 0,5 % en poids sec par rapport au poids sec total des fibres et du polyuréthane.

10. Feuille de sécurité selon l'une quelconque des revendications précédentes, **caractérisée par le fait que** ladite feuille comprend au moins un élément de sécurité, en particulier choisi parmi les dispositifs optiquement variables (OVD), notamment les éléments à effet interférentiel en particulier les éléments iridescents, les hologrammes, les fils de sécurité, les filigranes, les planchettes, les pigments ou fibres luminescents et/ou iridescents et/ou magnétiques et/ou métalliques et leurs combinaisons.

11. Feuille de sécurité selon l'une quelconque des revendications précédentes, **caractérisée par le fait que** ladite feuille comprend un dispositif RFID.

12. Feuille de sécurité selon l'une quelconque des revendications précédentes, **caractérisée par le fait que** ladite feuille comprend une couche de surfaçage externe, de préférence comprenant un liant élastomère transparent ou translucide, tel qu'un polyuréthane, et une silice colloïdale.

13. Procédé de fabrication d'une feuille de sécurité telle que décrite dans l'une quelconque des revendications 1 à 12, consistant à former ladite feuille par voie humide à partir d'une suspension aqueuse comprenant :
- des fibres,
- une dispersion anionique d'un polyuréthane, ledit polyuréthane étant en une proportion comprise entre 5 et 45 % en poids sec par rapport au poids sec total des fibres et du polyuréthane et présentant une élongation à la rupture supérieure à 600 %, et
- un agent de floculation cationique principal, en une quantité comprise entre 1 et 5 % en poids sec par rapport au poids sec total des fibres et du polyuréthane, puis à essorer et sécher ladite feuille.

14. Procédé selon la revendication 13, **caractérisé par le fait que** lesdites fibres, ladite dispersion anionique de polyuréthane et ledit agent de floculation cationique principal sont mélangés en masse.

15. Document de sécurité **caractérisé par le fait qu'**il comprend une feuille de sécurité telle que décrite dans l'une quelconque des revendications 1 à 12 ou obtenue selon le procédé tel que défini selon l'une des revendications 13 ou 14.

16. Document de sécurité selon la revendication 15, **caractérisé par le fait que** ledit document est un moyen de paiement, tel qu'un billet de banque, une carte de paiement, un chèque ou un ticket restaurant, un document d'identité, tel qu'une carte d'identité, un visa, un passeport ou un permis de conduire, une carte, notamment d'accès, un ticket de loterie, un titre de transport ou encore un ticket d'entrée à des manifestations culturelles ou sportives, une carte de fidélité, une carte de prestation, une carte d'abonnement, une carte à jouer ou à collectionner, un bon d'achat ou un voucher, de préférence ledit document est un billet de banque, un permis de conduire ou une carte, notamment d'accès, de paiement ou d'identité, de fidélité, de prestation, d'abonnement, à jouer ou à collectionner.

## Patentansprüche

1. Knitterfester Sicherheitsmaterialbogen, umfassend:
- Faserstoff,
- Polyurethan-Aggregate, die Polyurethan in einem Anteil zwischen 5 und 45% Trockengewicht bezogen auf das Gesamttrockengewicht von Faserstoff und Polyurethan aufweisen und die eine Reißdehnung von mehr als 600% aufweisen und
- ein kationisches Primär-Flockungsmittel in eine Menge zwischen 1 und 5% Trockengewicht bezogen auf das Gesamttrockengewicht von Faserstoff und Polyurethan.

2. Sicherheitsmaterialbogen nach Anspruch 1, **dadurch gekennzeichnet, dass** die Menge des Polyurethans zwischen 10 und 30% Trockengewicht bezogen auf das Gesamttrockengewicht von Faserstoff und Polyurethan ausmacht.

3. Sicherheitsmaterialbogen nach einem der vorhergehenden Ansprüche, **dadurch gekennzeichnet, dass** das Polyurethan eine Reißdehnung von mehr als 1000% hat.

4. Sicherheitsmaterialbogen nach einem der vorhergehenden Ansprüche, **dadurch gekennzeichnet, dass** das Polyurethan eine Glasübergangstemperatur von weniger als 0° C, vorzugsweise weniger als - 25° C, weiter bevorzugt weniger als - 40° C hat.

5. Sicherheitsmaterialbogen nach einem der vorhergehenden Ansprüche, **dadurch gekennzeichnet, dass** das Polyurethan aus Polyurethan-Polyester, Polyurethan-Polyether und Polyurethan-Polycarbonat ausgewählt ist und vorzugsweise ein Polyurethan-Polyester ist.

6. Sicherheitsmaterialbogen nach einem der vorhergehenden Ansprüche, **dadurch gekennzeichnet, dass** das kationische Primär-Flockungsmittel ausgewählt ist aus einem kationischen Harz, Polyacrylamiden, Polyethyleniminen, Polyvinylaminen und deren Mischungen, vorzugsweise ein kationisches Harz ist und insbesondere ein Polyamid-Amin-Epichloridrin-Harz ist.

7. Sicherheitsmaterialbogen nach einem der vorhergehenden Ansprüche, **dadurch gekennzeichnet, dass** der Faserstoff Zellulosefasern umfasst, insbesondere Baumwollfasern, wobei die Zellulosefasern bevorzugt in einem Anteil von mehr als 60% des Trockengewichtes bezogen auf das Gesamttrockengewicht von Faserstoff und des Polyurethans, insbesondere in einem Anteil von mehr als 70%, vorliegen.

8. Sicherheitsmaterialbogen nach einem der vorhergehenden Ansprüche, **dadurch gekennzeichnet, dass** der Faserstoff synthetische Faserstoffe umfasst, insbesondere ausgewählt aus Polyamidfasern und/oder Polyesterfasern, wobei die synthetischen Faserstoffe vorzugsweise in einer Menge enthalten sind, die zwischen 5 und 30% bezogen auf das Gesamttrockengewicht von Faserstoff und Polyurethan ausmacht.

9. Sicherheitsmaterialbogen nach einem der vorhergehenden Ansprüche, **dadurch gekennzeichnet, dass** der Materialbogen ein kationisches Sekundär-Flockungsmittel enthält, das ausgewählt ist aus Polyacrylamiden, Polyethyleniminen, Polyvinylaminen und deren Mischungen, in einer Menge, die zwischen 0,1 und 0,5% Trockengewicht bezogen auf das Gesamttrockengewicht von Faserstoff und Polyurethan liegen kann.

10. Sicherheitsmaterialbogen nach einem der vorhergehenden Ansprüche, **dadurch gekennzeichnet, dass** der Materialbogen mindestens ein Sicherheitselement umfasst, insbesondere ausgewählt aus optisch variablen Vorrichtungen (OVD), insbesondere aus Elementen mit Interferenzeffekten, insbesondere irisierenden Elementen, Hologrammen, Sicherheitsfäden, Wasserzeichen, Prägungen, leuchtenden und/oder irisierenden und/oder magnetischen und/oder metallischen Pigmenten oder Fäden und Kombinationen davon.

11. Sicherheitsmaterialbogen nach einem der vorhergehenden Ansprüche, **dadurch gekennzeichnet, dass** der Materialbogen eine RFID-Vorrichtung umfasst.

12. Sicherheitsmaterialbogen nach einem der vorhergehenden Ansprüche, **dadurch gekennzeichnet, dass** der Materialbogen eine äußere Deckschicht umfasst, die vorzugsweise ein transparentes oder transluzentes Elastomer-Bindemittel wie Polyurethan enthält, und kolloidales Siliciumdioxid enthält.

13. Verfahren zur Herstellung eines Sicherheitsmaterialbogens nach einem der Ansprüche 1 bis 12, umfassend die Bildung des Bogens im Nassverfahren aus einer wässrigen Suspension, umfassend:
- Faserstoff,
- eine anionische Dispersion von Polyurethan, wobei das Polyurethan in einem Anteil zwischen 5 und 45% Trockengewicht bezogen auf das Gesamttrockengewicht von Faserstoff und Polyurethan vorliegt, und insbesondere eine Reißdehnung vom mehr als 600% aufweisen kann, und
- ein kationisches Primär-Flockungsmittel, insbesondere in einer Menge zwischen 1 und 5% des Trockengewichts bezogen auf das Gesamttrockengewicht von Faserstoff und Polyurethan, und anschließendes Schleudern und Trocknen des Blatts.

14. Verfahren nach Anspruch 13, **dadurch gekennzeichnet, dass** der Faserstoff, die anionische Polyurethandispersion und das kationische Primär-Flockungsmittel zu einer Masse gemischt werden.

15. Sicherheitsdokument, **dadurch gekennzeichnet, dass** es einen Sicherheitsmaterialbogen nach einem der Ansprüche 1 bis 12 oder erhalten durch das Verfahren nach einem der Ansprüche 13 oder 14 umfasst.

16. Sicherheitsdokument nach Anspruch 15, **dadurch gekennzeichnet, dass** das Dokument ein Zahlungsmittel ist, wie beispielsweise eine Banknote, eine Kreditkarte, ein Scheck oder ein Restaurant-Ticket, ein Identitätsdokument wie beispielswiese ein Personalausweis, ein Visum, ein Reisepass oder ein Führerschein, eine Karte, insbesondere eine Zugangskarte, ein Lotterielos, ein Ticket oder ein Ticket für kulturelle oder sportliche Veranstaltungen, eine Loyalitätskarte, eine Vorteilskarte, eine Mitgliedskarte, eine Spiel- oder Sammelkarte, ein Einkaufsbon oder Gutschein, wobei vorzugsweise das Dokument eine Banknote, ein Führerschein oder eine Karte, insbesondere Zugangs-, Bezahl- oder Identitäts-, Loyalitäts-, Service-, Abonnement-, Spiel- oder Sammelkarte ist.

## Claims

1. Crease-resistant security sheet comprising:
- fibers,
- polyurethane aggregates, the polyurethane being in a proportion of between 5 and 45 % by dry weight relative to the total dry weight of the fibers and of the polyurethane and having an elongation at break of greater than 600 %, and
- a main cationic flocculation agent in a quantity of between 1 and 5 % by dry weight relative to the total dry weight of the fibers and of the polyurethane.

2. Security sheet according to claim 1, **characterised in that** the proportion of the said polyurethane is between 10 and 30 % by dry weight relative to the total dry weight of the fibers and of the polyurethane.

3. Security sheet according to one of the preceding claims, **characterised in that** the said polyurethane has an elongation at break of greater than 1000 %.

4. Security sheet according to any one of the preceding claims, **characterised in that** the said polyurethane has a glass transition temperature below 0°C, preferably below - 25°C, and more preferably below - 40°C.

5. Security sheet according to any one of the preceding claims, **characterised in that** the said polyurethane is chosen from a polyurethane-polyester, a polyurethane-polyether and a polyurethane-polycarbonate and is preferably a polyurethane-polyester.

6. Security sheet according to any one of the preceding claims, **characterised in that** the said main cationic flocculation agent is chosen from a cationic resin, polyacrylamides, polyethyleneimines, polyvinylamines and mixtures thereof and is preferably a cationic resin, more preferably a polyamide-amine-epichlorohydrin resin.

7. Security sheet according to any one of the preceding claims, **characterised in that** the said fibers comprise cellulose fibers, in particular cotton fibers, the said cellulose fibers preferably being present in a proportion of greater than 60 % by dry weight relative to the total dry weight of the fibers and of the polyurethane, in particular in a proportion of greater than 70 %.

8. Security sheet according to any one of the preceding claims, **characterised in that** the said fibers comprise synthetic fibers, in particular chosen from polyamide fibers and/or polyester fibers, the said synthetic fibers preferably being present in a quantity of between 5 and 30 % by dry weight relative to the total dry weight of the fibers and of the polyurethane.

9. Security sheet according to any one of the preceding claims, **characterised in that** the said sheet comprises a secondary cationic flocculation agent chosen from polyacrylamides, polyethyleneimines, polyvinylamines and mixtures thereof, in a quantity that may be between 0.1 and 0.5 % by dry weight relative to the total dry weight of the fibers and of the polyurethane.

10. Security sheet according to any one of the preceding claims, **characterised in that** the said sheet comprises at least one security element, in particular chosen from optically variable devices (OVD), especially elements having an interference effect, in particular iridescent elements, holograms, security threads, watermarks, flakes, luminescent and/or iridescent and/or magnetic and/or metallic pigments or fibers and combinations thereof.

11. Security sheet according to any one of the preceding claims, **characterised in that** the said sheet comprises an RFID device.

12. Security sheet according to any one of the preceding claims, **characterised in that** the said sheet comprises an external surfacing layer, preferably comprising a transparent or translucent elastomeric binder, such as a polyurethane, and a colloidal silica.

13. Process for the manufacture of a security sheet as described in any one of claims 1 to 12, consisting in wet-forming the said sheet from an aqueous suspension comprising:
- fibers,
- an anionic dispersion of a polyurethane, the said polyurethane being in a proportion of between 5 and 45 % by dry weight relative to the total dry weight of the fibers and of the polyurethane and having an elongation at break of greater than 600 %, and
- a main cationic flocculation agent in a quantity of between 1 and 5 % by dry weight relative to the total dry weight of the fibers and of the polyurethane, then in draining and drying the said sheet.

14. Process according to claim 13, **characterised in that** the said fibers, the said anionic dispersion of polyurethane and the said main cationic flocculation agent are integrally mixed.

15. Security document **characterised in that** it comprises a security sheet as described in any one of claims 1 to 12 or obtained according to the process as defined according to either of claims 13 or 14.

16. Security document according to claim 15, **characterised in that** the said document is a means of payment, such as a banknote, a payment card, a cheque or a luncheon voucher, an identity document, such as an identity card, a visa, a passport or a driving licence, a card, in particular an access card, a lottery ticket, a travel pass or even an entry ticket to cultural or sporting events, a loyalty card, a benefit card, a membership card, a playing or trading card, a gift card or a voucher, the said document preferably being a banknote, a driving licence or a card, in particular an access card, payment or identity card, loyalty card, benefit card, membership card, playing or trading card.
